# EUROPEAN PATENT SPECIFICATION

(11) **EP 3 178 618 B1**
(45) Date of publication and mention of the grant of the patent: **06.05.2020**
(21) Application number: 15829593.1
(22) Date of filing: 23.07.2015
(51) Int. Cl.: B25J 9/22, G05B 19/4069, G05B 19/42, G05B 19/425

(54) **OFFLINE TEACHING DEVICE**
OFFLINE-LEHRVORRICHTUNG
DISPOSITIF D'APPRENTISSAGE HORS-LIGNE

(30) Priority: 05.08.2014 JP 2014159179
(43) Date of publication of application: 14.06.2017
(73) Proprietor: Panasonic Intellectual Property Management Co., Ltd., Osaka-shi, Osaka 540-6207 (JP)
(72) Inventor: HIRAYAMA, Masaya, Osaka-shi Osaka 540-6207 (JP); OKAZAKI, Yoshiyuki, Osaka-shi Osaka 540-6207 (JP)
(74) Representative: Vigand, Philippe
(86) International application number: PCT/JP2015/003689
(87) International publication number: WO 2016/021130

(56) References cited:
- JP-A- H09 230 917
- JP-A- H10 180 664
- JP-A- S63 288 685
- JP-A- 2000 190 264
- JP-A- 2007 061 940
- JP-A- 2007 242 054
- JP-A- 2009 190 113

## Description

### TECHNICAL FIELD

The present disclosure relates to an offline teaching device, and more particularly relates to displaying of commands constituting a teaching program.

### BACKGROUND ART

An offline teaching device for forming and editing a teaching program of an industrial robot on a computer using offline teaching software has been known. The offline teaching device displays a model such as a robot and a workpiece three-dimensionally or two-dimensionally on a display device such as a liquid crystal display, and forms and edits a teaching program while movement of the robot is checked, on the displayed model. Note here that teaching is also referred to as "giving instructions."

PTL 1 describes a graphic display device for displaying a tool trajectory, wherein the graphic display device displays the content of a numerical control (NC) processing program with respect to the tool trajectory in a region designated by a cursor.

PTL 2 describes a teaching point information display device for displaying a teaching point diagram, wherein point numbers of the teaching points are displayed in the vicinity of teaching points. PTL 2 mentions that a program of a welding robot includes a starting point detection program, a program in which a welding condition is set, and a program in which a crater condition is set, and these programs are executed sequentially.

PTL 3 describes an offline drawing method of a robot for drawing a direction program of a robot, wherein colors of drawn lines are changed.

### Citation List

### Patent Literature

PTL 1: Japanese Patent Application Unexamined Publication No. S59-71515
PTL 2: Japanese Patent Application Unexamined Publication No. S59-194214
PTL 3: Japanese Patent Application Unexamined Publication No. S62-286106

### SUMMARY OF THE INVENTION

A welding system for carrying out welding using a robot executes a work while it controls an operation of the robot, an output of a welding machine, and the like, according to a teaching program. The teaching program is roughly divided into two programs, that is, a position detection program for detecting position displacement of a workpiece before welding, and a welding program for executing welding. The position detection program includes a plurality of position detection commands, and the welding program includes a plurality of welding commands.

The position detection program is generally executed before welding is actually carried out. That is to say, in the teaching program, the position detection commands for detecting the position displacement, and the welding commands for controlling a welding output are registered in distant places from each other in the program. Therefore, a detection result (position displacement from ideal position) obtained by executing, detecting and storing a position detection command is not displayed in a state in which a welding command is displayed. Therefore, checking of correspondence between a position detection command and a welding command increases worker's labor and causes a teaching error.

In order to solve the above-mentioned problems, an offline teaching device in accordance with the present disclosure includes a display unit, a storage unit, and a control unit according to the appended claims.

As mentioned above, the present disclosure can display a command corresponding to the operation trajectory in the corresponding position of the operation trajectory displayed in the model display portion displaying the model diagram. Therefore, this makes it possible to easily specify an edition section when the teaching program is carried out, to reduce edition error, and to enhance the accuracy of the program and formation efficiency of the program.

### BRIEF DESCRIPTION OF THE DRAWINGS

FIG. 1 shows a schematic configuration of an offline teaching device in accordance with a first exemplary embodiment.
FIG. 2 shows display unit 30 of the first exemplary embodiment.
FIG. 3 shows display unit 30 of a modification of the first exemplary embodiment.
FIG. 4 shows a schematic configuration of an offline teaching device in accordance with a second exemplary embodiment.
FIG. 5 shows model display portion 32 of an offline teaching device in accordance with a third exemplary embodiment, showing a state before edition.
FIG. 6 shows model display portion 32 of the offline teaching device in accordance with the third exemplary embodiment, showing a state during edition.

### DETAILED DESCRIPTION OF THE PREFERRED EMBODIMENT

### FIRST EXEMPLARY EMBODIMENT

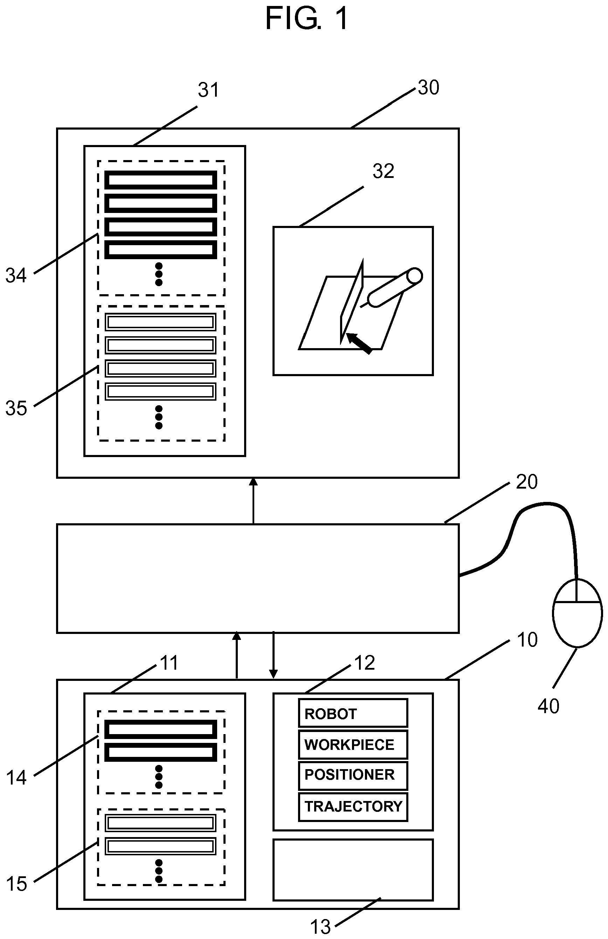

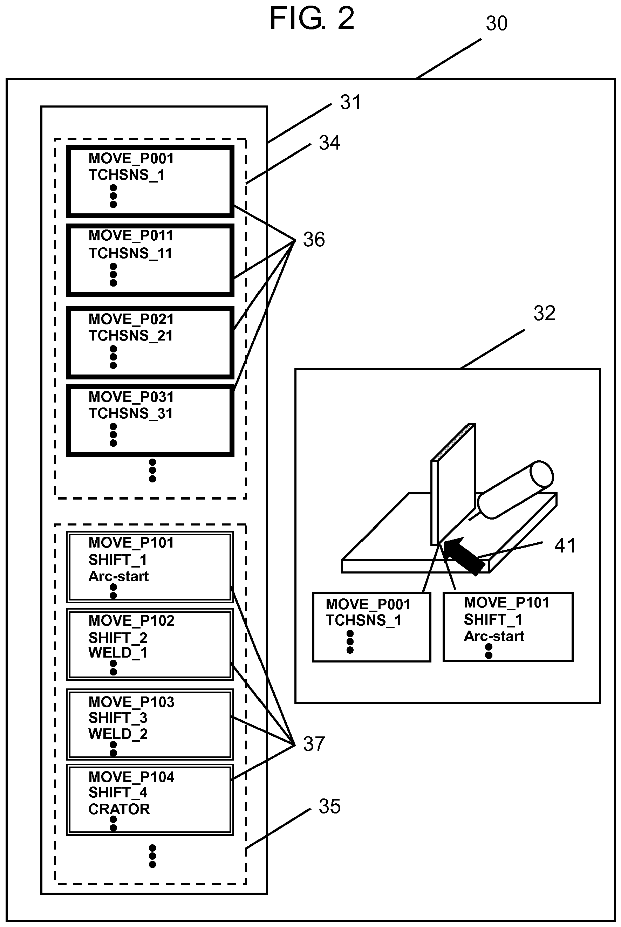

Hereinafter, a first exemplary embodiment of the present disclosure is described with reference to FIGs. 1 and 2.

FIG. 1 shows a schematic configuration of an offline teaching device in accordance with this exemplary embodiment. Note here that the offline teaching device includes, for example, a personal computer and a display. FIG. 2 shows display unit 30 in accordance with this exemplary embodiment.

As shown in FIG. 1, the offline teaching device includes storage unit 10 for storing various pieces of information, display unit 30 for displaying various pieces of information, pointing device 40 capable of designating a position on display unit 30, and control unit 20 for controlling storage unit 10, display unit 30, and pointing device 40.

Storage unit 10 includes teaching program storage portion 11, model data storage portion 12, and command-combination information storage portion 13. Teaching program storage portion 11 stores a teaching program. The teaching program includes a position detection program, and a welding program. Teaching program storage portion 11 includes position detection program storage portion 14 for storing the position detection program, and welding program storage portion 15 for storing the welding program. Position detection program storage portion 14 includes a plurality of position detection commands for executing position detection. Welding program storage portion 15 includes a plurality of welding commands for executing welding. Model data storage portion 12 stores model data. The model data are model information of a robot, an external axis (positioner), and a workpiece, as well as an operation trajectory of a tip of a welding torch held by the robot. Command-combination information storage portion 13 stores command-combination information showing the corresponding relation between the position detection command and the welding command in the teaching program and the operation trajectory of the tip of the welding torch.

Control unit 20 reads the teaching program, the model data, and the command-combination information stored in storage unit 10, and displays them on display unit 30. Furthermore, control unit 20 generates command-combination information, and stores it in command-combination information storage portion 13. Furthermore, control unit 20 changes the position detection commands, the welding commands, and the model data, constituting the teaching program, and stores (updates) them in teaching program storage portion 11 and model data storage portion 12. Furthermore, control unit 20 controls displaying of display unit 30 and information of storage unit 10 in response to an input (a designated position on display unit 30) by pointing device 40.

Display unit 30 includes teaching program display portion 31 for displaying the teaching program, and model display portion 32 for displaying a model diagram. Teaching program display portion 31 has position detection program display portion 34 for displaying the position detection program, and welding program display portion 35 for displaying the welding program.

Pointing device 40 is, for example, a mouse and a touch pad. Pointing device 40 designates a position on display unit 30.

Next, more specific displaying of display unit 30, as well as functions of storage unit 10, control unit 20, and pointing device 40 are described with reference to FIG. 2. FIG. 2 shows display unit 30 in accordance with this exemplary embodiment.

As shown in FIG. 2, teaching program display portion 31 displays a teaching program stored in teaching program storage portion 11 of storage unit 10. The teaching program has the position detection program and the welding program. The teaching program and the welding program are displayed on position detection program display portion 34 and welding program display portion 35, respectively. Since the number of commands included in the teaching program is generally several tens to several hundreds, all of the commands cannot be displayed once. Therefore, in general, an operator needs to check commands by scrolling the whole teaching program up and down, or scrolling each of the position detection program and the welding program.

Position detection program display portion 34 displays a plurality of position detection commands 36. The number of position detection commands 36 depends on the number of sections to be position-detected when one teaching program is executed. Therefore, for example, when a workpiece having a complicated shape is welded, the number of position detection commands 36 is increased. FIG. 2 shows an example in which the first four position detection commands 36 are displayed. Examples of position detection commands 36 include "MOVE_P001" to indicate an operation of the tip of the welding torch, and "TCHSNS_1" to detect an actual position of a workpiece (displacement from an ideal position) by contact between the tip of the welding torch and the workpiece. When position detection is actually carried out with respect to a workpiece, a command included in position detection commands 36 is sent to a robot or a welding machine so as to operate the robot or the welding machine. Furthermore, a result (displacement from an ideal position) actually obtained by position detection commands 36 is stored in a controller of the operated robot or welding machine. Also, the position detection program is provided with a region in which a result of the position detection is recorded. The detection result is added for each position detection command 36.

Welding program display portion 35 displays a plurality of welding commands 37. The number of welding commands 37 depends on the number of sections to be welded when one teaching program is executed. Therefore, for example, when a workpiece having a complicated shape is welded, the number of welding commands 37 is increased. FIG. 2 shows an example in which the first four welding commands 37 are displayed. Examples of welding commands 37 include "MOVE_P001" to indicate movement of the tip of the welding torch and "Arc-start" or "WELD_1" to indicate welding conditions. When welding is actually carried out with respect to a workpiece, a command included in welding commands 37 is sent to a robot or a welding machine to operate the robot or the welding machine. Furthermore, "SHIFT_1," a position correction command that reflects the result obtained by the position detection program, can be added into welding commands 37.

Individual commands included in position detection commands 36 and welding commands 37 are described more specifically. For example, "MOVE_P001" is a command to move the tip of the welding torch to a position, P001. When a robot to be used at this time is a vertical articulated robot, the command indicates, for example, an angle of each axis. Furthermore, as to movement speed of the welding torch, for example, the rotation speed of each axis of the robot is designated. Furthermore, for example, "WELD_1" and "Arc-start" are commands for designating welding conditions such as a welding voltage, a welding current, and a welding-wire feeding rate with respect to a welding machine to be connected. Furthermore, "SHIFT_1" is a command to correct a position of the tip of the welding torch so that the result of position detection is reflected.

As shown in FIG. 2, model display portion 32 displays a model diagram drawn by the model data stored in model data storage portion 12 of storage unit 10. The model diagram is generated by control unit 20 based on information of a robot (corresponding to "ROBOT" in FIG. 1, and including information such as a shape or a dimension or a serial number of a robot, a welding torch, and the like), information of a workpiece (corresponding to "WORKPIECE" in FIG. 1, and including information such as a shape or a dimension or material of a workpiece, a joint shape, and the like), information of an external axis (corresponding to "POSITIONER" in FIG. 1, and including information such as a shape or a dimension of an external axis). That is to say, the model diagram is a virtual model for formation of a teaching program, and displayed using three-dimensional data. Note here that in model display portion 32 shown in FIG. 2, displaying of the external axis is omitted.

As shown in FIG. 2, display unit 30 displays pointer 41 which is moved by pointing device 40. Use of pointing device 40 and pointer 41 enables information (positions in the model diagram, commands in the teaching program, and the like) displayed on display unit 30 to be designated.

Furthermore, control unit 20 generates operation trajectory data (TRAJECTORY in FIG. 1) that is movement information of the tip of the welding torch held by the robot, based on the teaching program stored in teaching program storage portion 11, and stores the generated data in model data storage portion 12. Although not shown in FIG. 2, the operation trajectory of the tip of the welding torch can be displayed in the model diagram displayed on model display portion 32.

Furthermore, control unit 20 generates command-combination information showing the corresponding relation between the position detection command or the welding command and the operation trajectory, based on the teaching program stored in teaching program storage portion 11, and stores the generated command-combination information in the command-combination information storage portion 13. Note here that control unit 20 may generate command-combination information showing the corresponding relation between the individual commands included in the position detection commands or the welding commands and the operation trajectory, and may store the generated information in command-combination information storage portion 13.

Then, control unit 20 displays a position detection command and a welding command corresponding to the operation trajectory, on the operation trajectory displayed three-dimensionally in model display portion 32, based on the command-combination information. Furthermore, the commands displayed by control unit 20 may be individual commands included in the position detection commands or the welding commands. In FIG. 2, the first position detection command of the position detection program and the first welding command of the welding program are displayed. This displaying may include displaying of all of the position detection commands or the welding commands, or may include displaying of only individual commands (for example, "TCHSNS_1" that is a command for a contact operation, and "Arc-start" that is a command with respect to the welding condition) included in the position detection commands or the welding commands. Thus, control unit 20 displays a command corresponding to the operation trajectory based on the command-combination information.

Next, a specific offline teaching method is described with reference to FIGs. 1 and 2.

Firstly, an operator stores model data about a robot, an external axis (positioner), and a workpiece in model data storage portion 12 of storage unit 10. Thus, control unit 20 can display a model diagram on model display portion 32 of display unit 30.

Next, the operator forms a position detection program while viewing the model diagram. That is to say, the operator stores position detection commands 36 in position detection program storage portion 14 of storage unit 10. Note here that each position detection command 36 has a region in which a position detection result is additionally stored. Specifically, "TCHSNS_1" is provided with a region into which a result obtained by executing a contact operation command for position detection, that is, a command "TCHSNS_1" after "MOVE_P001" shown in FIG. 2, can be added.

Next, the operator forms a welding program while viewing the model diagram. That is to say, the operator stores welding command 37 in welding program storage portion 15 of storage unit 10. At this time, the operator can form welding command 37 while viewing position detection command 36 displayed in the model diagram. The operator reflects the result obtained by position detection command 36 on welding command 37 during formation of welding command 37. Specifically, the operator adds a position correction command, "SHIFT_1," shown in FIG. 2 after the "MOVE_P001" so as to reflect the detection result of "TCHSNS_1" in which the detection result has been additionally written. That is to say, when an actual teaching program is executed, a position detection result by a command, "TCHSNS_1," is updated for each workpiece. Along with this, the position correction command, "SHIFT_1," is also updated.

Note here that a route in which the welding torch moves so as to detect position displacement in the position detection program and a route in which the welding torch carries out welding in the welding program are not necessarily the same as each other. The reason therefore is as follows. In the position detection program, it is preferable to detect a plurality of positions to be detected as efficiently as possible. That is to say, in the position detection program, it is preferable that position detection is carried out in such an order that the distance in which the welding torch moves becomes the shortest. On the other hand, in the welding program, welding is required to be carried out along a predetermined welding line. Thus, in the offline teaching device of the present disclosure, position detection command 36 is displayed on the operation trajectory of the model diagram. Therefore, it is not necessary to find out position detection program display portion 34 by scrolling. This enables an operator to find out the position detection result easily without incorrect selection of the position detection result to be reflected on welding command 37.

Furthermore, in formation of the welding program, the operator may form all welding commands 37 once, and then may add a position correction command (for example, "SHIFT_1") to welding commands 37 such that the detection result of position detection command 36 is reflected. Alternatively, in formation of the welding program, the operator may add a position correction command such that the detection result of position detection command 36 is reflected every time the operator forms one welding command 37.

As mentioned above, according to this exemplary embodiment, position detection command 36 can be displayed on model display portion 32 thus facilitating understanding and edition of the teaching program. Furthermore, errors in teaching can be reduced during formation of the welding program.

### MODIFICATION OF FIRST EXEMPLARY EMBODIMENT

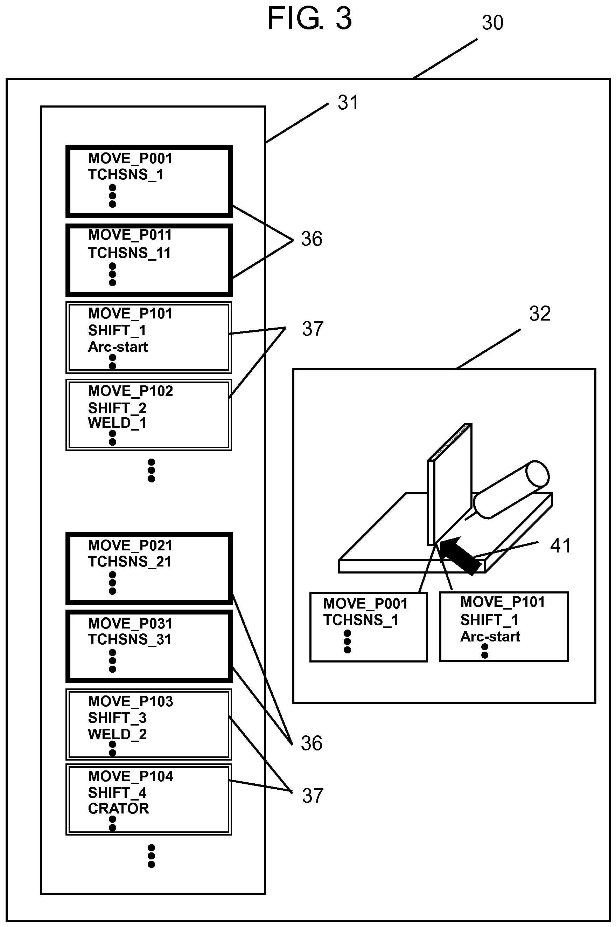

Next, a modification of the first exemplary embodiment is described with reference to FIG. 3. FIG. 3 shows display unit 30 of this modification.

In the teaching program of the first exemplary embodiment, as shown in FIG. 2, all position detection commands 36 are firstly executed as a position detection program, and thereafter all welding commands 37 are then executed as a welding program. However, a teaching program is not necessarily limited to this. As shown in FIG. 3, a teaching program may be configured such that position detection commands 36 and welding commands 37 are respectively executed in the middle of each other. In this case, position detection command 36 necessary to obtain a position correction command of welding command 37 only needs to be executed before welding command 37 to be executed in the middle. Thus, alternate execution of the position detection command and the welding command enables a welding torch to be moved more efficiently.

Note here that in this case, in order to check position detection command 36 and welding command 37 constituting the teaching program, whole teaching program display portion 31 is scrolled vertically because the position detection program and the welding program are not brought together.

### SECOND EXEMPLARY EMBODIMENT

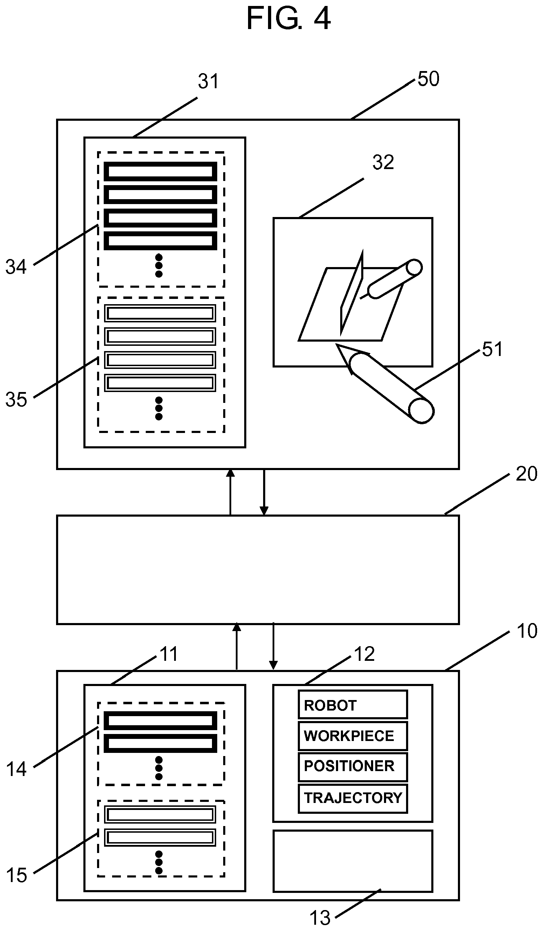

Next, a second exemplary embodiment is described with reference to FIG. 4. Note here that in this exemplary embodiment, the same reference numerals are given to the same sections as in the first exemplary embodiment, and the detailed description thereof is omitted herein.

FIG. 4 shows a schematic configuration of an offline teaching device in accordance with this exemplary embodiment. This configuration is different from the configuration of FIG. 1 in that display unit 50 has an input function, and display unit 50 is, for example, a touch panel.

This exemplary embodiment does not have pointing device 40 of the first exemplary embodiment. Instead, display unit 50 is allowed to have an input function, and input information is sent from display unit 50 to control unit 20. This enables a display position of display unit 50 to be designated directly by touch pen 51. Note here that instead of touch pen 51, an operator's finger or a common pen may be employed.

In addition to an effect of the first exemplary embodiment, this exemplary embodiment has an effect of making the input by an operator easier. In this exemplary embodiment, it is not necessary to connect a pointing device to control unit 20.

### THIRD EXEMPLARY EMBODIMENT

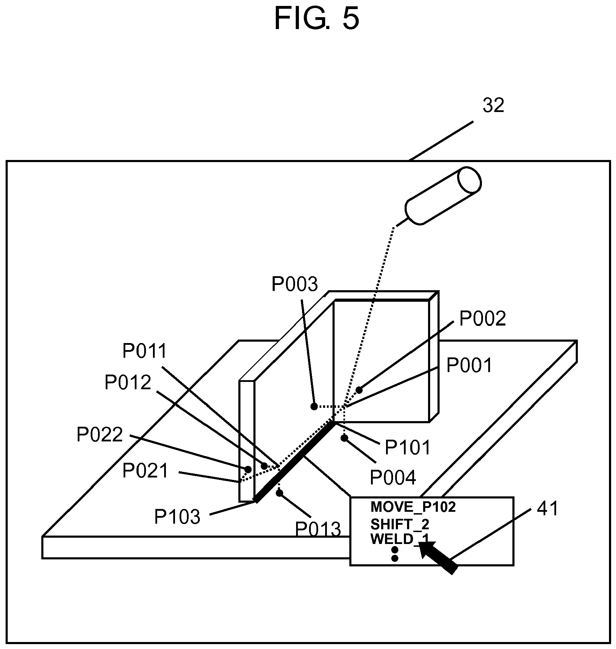

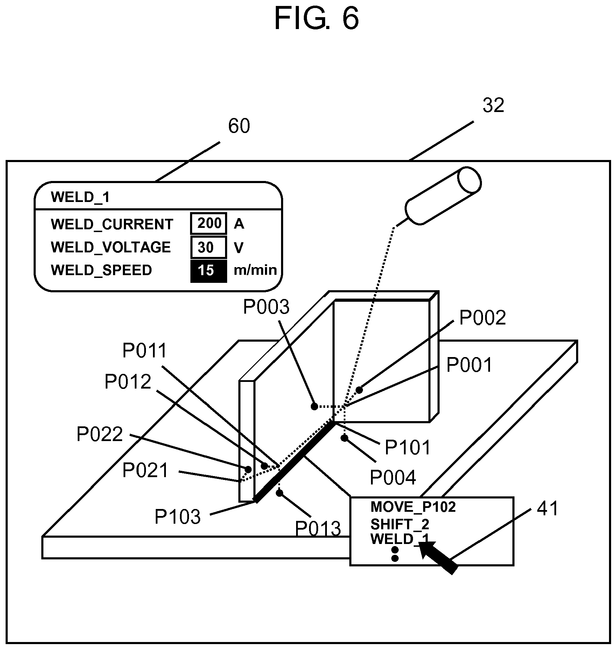

This exemplary embodiment is described with reference to FIGs. 5 and 6. In this exemplary embodiment, the same reference numerals are given to the same sections as in the first and second exemplary embodiments, and the detailed description thereof is omitted herein.

FIG. 5 shows model display portion 32 of an offline teaching device in accordance with this exemplary embodiment, showing a state before edition. FIG. 6 shows model display portion 32 of the offline teaching device in accordance with this exemplary embodiment, showing a state during edition. Note here that since the other configurations of the offline teaching device in this exemplary embodiment are the same as in the first or second exemplary embodiment, and the detailed description thereof is omitted.

In the first and second exemplary embodiments, model display portion 32 can display a command corresponding to an operation trajectory, but edition of the command is carried out in teaching program display portion 31. On the contrary, in the offline teaching device of this exemplary embodiment, an edition screen of the command can be displayed in model display portion 32.

Firstly, an example is described using a simple program as shown in FIG. 5. In FIG. 5, an operation trajectory of a tip of a welding torch by the position detection program is shown by a dotted line, and an operation trajectory of the tip of the welding torch by the welding program is shown by a thick line. In FIG. 5, a contact point between the welding torch and a workpiece are shown by a black circle.

Specifically, in the position detection program, the welding torch moves from the upper side of the workpiece to position P001, and the welding torch carries out a contact detection operation with respect to the workpiece from position P001 toward positions P002, P003, and P004. Subsequently, the welding torch moves to position P011, and the welding torch carries out a contact detection operation with respect to the workpiece from position P011 toward positions P012 and P013. Finally, the welding torch moves to position P021, and carries out a contact detection operation with respect to the workpiece from position P021 toward position P022. In the contact detection operation toward positions P002, P003, P004, P012, P013, and P022, position displacement is detected between the position in which contact has been actually detected and an ideal position. Based on these detection results, position information in the welding command is corrected.

Next, a welding program is specifically described. In the welding program, firstly, the welding torch starts welding at position P101. Subsequently, while the welding torch moves to position P103, a workpiece is welded. Finally, the welding torch completes welding at position P103.

In this exemplary embodiment, as shown in FIG. 5, a command (for example, "WELD_1" in FIG. 5) displayed in model display portion 32 is designated by pointer 41, and input by double-clicking. With this operation, as shown in FIG. 6, edition window 60 of the designated command is displayed in model display portion 32. An operator can edit (change) the selected command using edition window 60. FIG. 6 shows a state in which welding speed (corresponding to "WELD_SPEED" in FIG. 6) can be edited. When edition is completed, control unit 20 updates stored content of teaching program storage portion 11, stored content of command-combination information storage portion 13, and stored content of model data storage portion 12, based on the edition content of the command.

As mentioned above, this exemplary embodiment edits (changes) only the selected command. Therefore, unlike conventionally, it is not necessary to scroll teaching program display portion 31. This can reduce labor of an operator and errors in selection of edition commands.

Furthermore, the first to third exemplary embodiments display all the commands included in the position detection commands and the welding commands, but it is possible to set to display only predetermined commands. Furthermore, the first to third exemplary embodiments display only the commands corresponding to the operation trajectory specified by pointer 41, but it is possible to set to display all the commands within the predetermined range from the specified place.

### INDUSTRIAL APPLICABILITY

The present disclosure enables a command corresponding to an operation trajectory to be displayed in a position corresponding to the operation trajectory displayed in a model display portion displaying the model diagram. Therefore, this facilitates specification of an edition section when the teaching program is formed, reduces edition error, and enhances accuracy of the program and formation efficiency of the program. Thus, the present disclosure is industrially applicable for an offline teaching device for editing a teaching program of a robot or a processing machine.

### REFERENCE MARKS IN THE DRAWINGS

- 10: storage unit
- 11: teaching program storage portion
- 12: model data storage portion
- 13: command-combination information storage portion
- 14: position detection program storage portion
- 15: welding program storage portion
- 20: control unit
- 30: display unit
- 31: teaching program display portion
- 32: model display portion
- 34: position detection program display portion
- 35: welding program display portion
- 36: position detection command
- 37: welding command
- 40: pointing device
- 41: pointer
- 50: display unit
- 51: touch pen
- 60: edition window

## Claims

1. An offline teaching device comprising:
a display unit (30) for displaying a teaching program and a model diagram and having a teaching program display portion (31) for displaying the teaching program and a model display portion (32) for displaying the model diagram;
a storage unit (10) for storing commands constituting the teaching program, and model data of the model diagram; and
a control unit (20) for controlling the display unit (30) and the storage unit (10),
wherein the teaching program includes a position detection program including a plurality of position detection commands, and a welding program including a plurality of welding commands,
the control unit (20) displays, in the model display portion (32) displaying the model diagram, an operation trajectory of a robot when the teaching program is executed, and
the control unit displays a part of the plurality of position detection commands and a part of the plurality of welding commands, in the model display portion (32) displaying the model diagram.

2. The offline teaching device of claim 1, further comprising an instruction device for indicating a predetermined position on the operation trajectory in the model diagram,
wherein the control unit displays the position detection commands and the welding commands, corresponding to the predetermined position, in the model display portion of the model diagram (32).

3. The offline teaching device of claim 2, wherein when the instruction device indicates the welding commands displayed in the model display portion of the model diagram (32), the control unit displays, in the model display portion of the model diagram (32), an edition screen for editing the welding commands indicated by the instruction device.

4. The offline teaching device of claim 3, wherein the control unit changes the welding commands indicated by the instruction device into edited content.

5. The offline teaching device of any one of claims 1 to 4, wherein only the set commands are displayed on the display unit by setting commands to be displayed on the display unit.

## Patentansprüche

1. Offlinelehrvorrichtung, die Folgendes umfasst:
eine Anzeigeeinheit (30) zum Anzeigen eines Lehrprogramms und eines Modelldiagramms mit einem Lehrprogrammanzeigeabschnitt (31) zum Anzeigen des Lehrprogramms und einem Modellanzeigeabschnitt (32) zum Anzeigen des Modelldiagramms;
eine Speichereinheit (10) zum Speichern von Befehlen, die das Lehrprogramm konstituieren, und von Modelldaten des Modelldiagramms; und
eine Steuereinheit (20) zum Steuern der Anzeigeeinheit (30) und der Speichereinheit (10),
wobei das Lehrprogramm ein Positionsdetektionsprogramm, das eine Vielzahl von Positionsdetektionsbefehlen beinhaltet, und ein Schweißprogramm, das eine Vielzahl von Schweißbefehlen beinhaltet, beinhaltet,
die Steuereinheit (20) zeigt im Modellanzeigeabschnitt (32), in dem das Modelldiagramm angezeigt wird, eine Operationstrajektorie eines Roboters an, wenn das Lehrprogramm ausgeführt wird, und
die Steuereinheit zeigt einen Teil der Vielzahl von Positionsdetektionsbefehlen und einen Teil der Vielzahl von Schweißbefehlen im Modellanzeigeabschnitt (32) an, in dem das Modelldiagramm angezeigt wird.

2. Offlinelehrvorrichtung nach Anspruch 1, die ferner eine Anweisungsvorrichtung zum Angeben einer vorbestimmten Position auf der Operationstrajektorie im Modelldiagramm umfasst,
wobei die Steuereinheit die Positionsdetektionsbefehle und die Schweißbefehle, die der vorbestimmten Position entsprechen, im Modellanzeigeabschnitt des Modelldiagramms (32) anzeigt.

3. Offlinelehrvorrichtung nach Anspruch 2, wobei, wenn die Anweisungsvorrichtung die Schweißbefehle angibt, die im Modellanzeigeabschnitt des Modelldiagramms (32) angezeigt werden, die Steuereinheit im Modellanzeigeabschnitt des Modelldiagramms (32) einen Bearbeitungsbildschirm zum Bearbeiten der Schweißbefehle, die von der Anweisungsvorrichtung angegeben werden, anzeigt.

4. Offlinelehrvorrichtung nach Anspruch 3, wobei die Steuereinheit die Schweißbefehle, die von der Anweisungsvorrichtung angegeben werden, in einen bearbeiteten Inhalt ändert.

5. Offlinelehrvorrichtung nach einem der Ansprüche 1 bis 4, wobei durch Einstellen von Befehlen, die auf der Anzeigeeinheit anzuzeigen sind, nur die eingestellten Befehle auf der Anzeigeeinheit angezeigt werden.

## Revendications

1. Dispositif d'apprentissage hors ligne comprenant :
une unité d'affichage (30) pour afficher un programme d'apprentissage et un diagramme de modèle et ayant une section d'affichage de programme d'apprentissage (31) pour afficher le programme d'apprentissage et une section d'affichage de modèle (32) pour afficher le diagramme de modèle ;
une unité de stockage (10) pour stocker des consignes constituant le programme d'apprentissage et des données de modèle du diagramme de modèle ; et
une unité de commande (20) pour commander l'unité d'affichage (30) et l'unité de stockage (10),
dans lequel le programme d'apprentissage inclut un programme de détection de position incluant une pluralité de consignes de détection de position, et un programme de soudage incluant une pluralité de consignes de soudage,
l'unité de commande (20) affiche, dans la section d'affichage de modèle (32) affichant le diagramme de modèle, une trajectoire d'opération d'un robot lorsque le programme d'apprentissage est exécuté, et
l'unité de commande affiche une partie de la pluralité de consignes de détection de position et une partie de la pluralité de consignes de soudage, dans la section d'affichage de modèle (32) affichant le diagramme de modèle.

2. Dispositif d'apprentissage hors ligne selon la revendication 1, comprenant en outre un dispositif d'instruction pour indiquer une position prédéterminée sur la trajectoire d'opération dans le diagramme de modèle,
dans lequel l'unité de commande affiche les consignes de détection de position et les consignes de soudage, correspondant à la position prédéterminée, dans la section d'affichage de modèle du diagramme de modèle (32).

3. Dispositif d'apprentissage hors ligne selon la revendication 2, dans lequel lorsque le dispositif d'instruction indique les consignes de soudage affichées dans la section d'affichage de modèle du diagramme de modèle (32), l'unité de commande affiche, dans la section d'affichage de modèle du diagramme de modèle (32), un écran d'édition pour éditer les consignes de soudage indiquées par le dispositif d'instruction.

4. Dispositif d'apprentissage hors ligne selon la revendication 3, dans lequel l'unité de commande modifie les consignes de soudage indiquées par le dispositif d'instruction en contenu édité.

5. Dispositif d'apprentissage hors ligne selon l'une quelconque des revendications 1 à 4, dans lequel seules les consignes définies sont affichées sur l'unité d'affichage par la définition de consignes à afficher sur l'unité d'affichage.
